# EUROPEAN PATENT APPLICATION

(11) **EP 3 053 940 A1**
(43) Date of publication of application: **10.08.2016**
(21) Application number: 14851216.3
(22) Date of filing: 01.10.2014
(51) Int. Cl.: C08G 18/02, C08G 18/28, C08J 9/00, C08G 101/00

(54) **POLYISOCYANURATE FOAM AND PREPARATION METHOD THEREFOR**

(30) Priority: 04.10.2013 KR 20130118815
(71) Applicant: LG Hausys, Ltd., Seoul 150-721 (KR)
(72) Inventor: KIM, Ji-Mun, Seoul 122-804 (KR); LEE, Eung-Kee, Anyang-si Gyeonggi-do 431-735 (KR); CHOI, Chul-June, Daejeon 305-340 (KR); KIM, Myeong-Hee, Anyang-si Gyeonggi-do 431-827 (KR); JI, Seung-Wook, Seoul 135-967 (KR); PARK, Gun-Pyo, Seoul 138-785 (KR)
(74) Representative: Gill Jennings & Every LLP
(86) International application number: PCT/KR2014/009281
(87) International publication number: WO 2015/050384

(57) **Abstract**

Provided is a polyisocyanurate foam formed by polymerizing and foaming a composition comprising: a polyol-based compound, an isocyanate-based compound and a solid flame retardant, wherein a viscosity of the polyol-based compound is 1,000 cps to 100,000 cps at 25°C. In addition, provided is a preparation method for a polyisocyanurate foam, comprising: (a) mixing and stirring a polyol-based compound having a viscosity of 1,000 cps to 100,000 cps at 25 °C and a solid flame retardant; and (b) mixing and stirring the mixture obtained from step (a) with an isocyanate-based compound to polymerize and foam polyisocyanurate.

## Description

### [Technical Field]

The present invention relates to a polyisocyanurate foam and a preparation method therefor.

### [Background Art]

Polyurethane foams are usable as insulating materials of various buildings, warehouses, refrigerators, etc. Here, the insulating materials, which are used to increase the cooling and heating efficiency by blocking or reducing heat exchange between the inside and the outside of the building, may be widely used in various fields such as building boards and panels, cold insulators for LNG ship, packaging materials for household appliances, car interior materials, etc. The polyurethane foam used as the insulating material may be formed in a foam cell structure filled with foaming gas to improve insulation performance.

Currently, the polyurethane foam is widely used due to excellent insulation performance and processability, little change in physical properties according to temperature variation as compared to other synthetic resins. However, as relevant regulations regarding flame retardancy of the insulating materials have been recently strengthen, research into a technology of adding flame retardancy to the polyurethane foam has been ongoing.

### [Disclosure]

### [Technical Problem]

It is an aspect of the present invention to provide a polyisocyanurate foam capable of having excellent insulation property and flame retardancy.

It is another aspect of the present invention to provide a preparation method for the polyisocyanurate foam.

### [Technical Solution]

In accordance with one aspect of the present invention, there is provided a polyisocyanurate foam formed by polymerizing and foaming a composition including: a polyol-based compound, an isocyanate-based compound and a solid flame retardant, wherein the viscosity of the polyol-based compound is about 1,000 cps to about 100,000 cps at about 25°C.

The solid flame retardant may have an average particle diameter of about 5 µm to about 100 µm.

The solid flame retardant may be at least one selected from the group consisting of a phosphorus-based flame retardant, a metal hydrate flame retardant, a halogen-based flame retardant, a flame-retardant aid and combinations thereof.

The solid flame retardant may be at least one selected from the group consisting of aluminum hydroxide, magnesium hydroxide, and combinations thereof.

The composition may include about 110 parts by weight to about 220 parts by weight of the isocyanate-based compound and about 5 parts by weight to about 40 parts by weight of the solid flame retardant, relative to 100 parts by weight of the polyol-based compound.

The viscosity of the polyol-based compound may be about 2,000 cps to about 30,000 cps at about 25°C.

A foam cell formed in the polyisocyanurate foam may have an average diameter of about 50 µm to about 290 µm.

The thermal conductivity of the polyisocyanurate foam may be about 0.023 W/mk or less.

The polyisocyanurate foam may further include at least one of a catalyst, a surfactant and a foaming agent.

The composition may not include a nucleating agent.

In accordance with another aspect of the present invention, a preparation method for a polyisocyanurate foam includes: (a) mixing and stirring a polyol-based compound having a viscosity of 1,000 cps to 100,000 cps at 25 °C and a solid flame retardant; and (b) mixing and stirring the mixture obtained from step (a) with an isocyanate-based compound to polymerize and foam polyisocyanurate.

The step (b) may include: mixing and stirring the mixture obtained from step (a) with at least one of a surfactant, a catalyst and a foaming agent, and then mixing and stirring the mixture obtained from step (a) with an isocyanate-based compound to polymerize and foam polyisocyanurate.

### [Advantageous Effects]

The polyisocyanurate foam may implement excellent insulation property and flame retardancy, and at the same time, may reduce the preparation cost to achieve economic feasibility.

### [Best Mode]

Hereinafter, exemplary embodiments of the present invention will be described in detail. However, these exemplary embodiments are only provided by way of example, and the present invention is not limited to these exemplary embodiments. Therefore, the present invention will be defined only by the scope of the appended claims.

In an exemplary embodiment of the present invention, the present invention provides a polyisocyanurate foam formed by polymerizing and foaming a composition including: a polyol-based compound, an isocyanate-based compound and a solid flame retardant, wherein the viscosity of the polyol-based compound is about 1,000 cps to about 100,000 cps at about 25°C.

In general, flame retardancy of the polyisocyanurate foam may be improved by adding flame retardant. However, since a liquid flame retardant may increase surface tension at the time of foaming the polyisocyanurate, a foam cell may have an increased size or may be even burst, such that surface is need to be controlled by adding a nucleating agent.

In an exemplary embodiment of the present invention, at the time of preparing the polyisocyanurate foam, the solid flame retardant is included to serve as the nucleating agent, such that the foam cell of the polyisocyanurate foam may be densely and uniformly formed. Further, the solid flame retardant may be properly dispersed by including the polyol-based compound having high viscosity, which may effectively contribute to dense and uniform formation of the foam cell. As a result, the polyisocyanurate foam may implement excellent insulation property and flame retardancy, and at the same time, may reduce the preparation cost to achieve economic feasibility.

The polyisocyanurate foam is a material including an isocyanurate group having a form in which three isocyanate groups are coupled to a polyurethane foam in a ring structure. By including the isocyanurate groups in which three isocyanate groups are coupled in a ring structure, the polyisocyanurate foam may implement excellent durability and thermal resistance.

The polyol-based compound may have, for example, the viscosity of about 1,000cps to about 100,000cps, specifically, about 2,000cps to about 30,000cps at 25°C. By including the polyol-based compound having the above-described range of viscosity, when the solid flame retardant is mixed and stirred in a preparation method to be described below, the solid flame retardant may be properly dispersed, and as a result, the foam cell may be densely and uniformly formed.

The polyol-based compound, which is a material including a plurality of hydroxyl groups in one molecule, reacts with the isocyanate-based compound to form a urethane-based bond, thereby performing polymerization. The polyol-based compound may be at least one selected from the group consisting of polyester polyol, polyether polyol and mixtures thereof. The polyester polyol may be prepared by reacting and polymerizing phthalic anhydride or adipic acid with ethylene oxide, propylene oxide or mixtures thereof, and the polyether polyol may be prepared by reacting and polymerizing at least one selected from the group consisting of ethylene glycol, 1,2-propane glycol, butylene glycol, 1,6-hexanediol, 1,8-octanediol, neopentyl glycol, 2-methyl-1,3-propanediol, glycerol (glycol), trimethylolpropane, 1,2,3-hexanetriol, 1,2,4-butanetriol, trimethylol methane, pentaerythritol, diethylene glycol, triethylene glycol, polyethylene glycol, tripropylene glycol, polypropylene glycol, dibutylene glycol, polybutylene glycol, sorbitol, sucrose, hydroquinone, resorcinol, catechol, bisphenol, and mixtures thereof with ethylene oxide, propylene oxide or mixtures thereof.

The isocyanate-based compound is a material including an isocyanate group in a molecule, and the isocyanate group reacts a hydroxyl group of the polyol-based compound to form a urethane bond, and further, three isocyanate groups react to induce trimerization, thereby forming polyisocyanurate. In order to form the polyisocyanurate, a material in which the number of isocyanate groups is larger than that of the isocyanate-based compound used for polymerizing polyurethane, may be used, for example, a diisocyanate compound having a high isocyanate index (NCO index), for example, about 250.

The isocyanate-based compound may be at least one selected from the group consisting of polymeric methylene diphenyl diisocyanate (polymeric MDI), monomeric methylene diphenyl diisocyanate (monomeric MDI), polymeric toluene diisocyanate (polymeric TDI), monomeric toluene diisocyanate (monomeric TDI), and mixtures thereof, but the present invention is not limited thereto.

The solid flame retardant may be at least one selected the group consisting of a phosphorus-based flame retardant, a metal hydrate flame retardant, a halogen-based flame retardant, a flame-retardant aid, and mixtures thereof. The solid flame retardant, which is an additive for improving combustibility resistance of plastics, may have a function to interfere with the combustion to implement excellent flame retardancy.

The phosphorus-based flame retardant may include at least one selected from triphenyl phosphate, cresyl diphenyl phosphate, isopropylphenyl diphenyl phosphate, and combinations thereof. The halogen-based flame retardant may include at least one selected from the group consisting of decabromodiphenyl oxide, octabromodiphenyl oxide, and combinations thereof. The flame-retardant aid may include antimony trioxide, etc.

Specifically, the solid flame retardant may be at least one selected from the group consisting of aluminum hydroxide, magnesium hydroxide, and combinations thereof, and as a result, the solid flame retardant may be more properly control surface tension at the time of polymerizing the composition, such that the foam cell of the polyisocyanurate foam may have small and uniform size. As described above, the foam cell has a small and uniform size, such that the polyisocyanurate foam may simultaneously implement excellent flame retardancy and insulation property.

The solid flame retardant may have an average particle diameter of about 5 µm to about 100 µm. The solid flame retardant having the above-described range of average particle diameter may more effectively control surface tension at the time of polymerizing the composition, and as a result, the foam cell may have dense and uniform size to further improve insulation property.

In an exemplary embodiment, the composition may include about 110 parts by weight to about 220 parts by weight of the isocyanate-based compound and about 5 parts by weight to about 40 parts by weight of the solid flame retardant, relative to 100 parts by weight of the polyol-based compound. Specifically, the composition may include about 5 parts by weight to about 30 parts by weight of the solid flame retardant, relative to 100 parts by weight of the polyol-based compound. As a result, the polyisocyanurate foam formed by polymerizing and foaming the composition may properly control growth of the foam cell during a foaming process, such that excellent flame retardancy and processability may be implemented.

The foam cell formed in the polyisocyanurate foam may have an average diameter of about 50 µm to about 290 µm. The average diameter represents a size of the foam cell, and means a mean diameter or a representative diameter. By having the average diameter within the above-described range, the foam cell may be uniformly formed, such that thermal stability may be maintained to be low, thereby implementing excellent insulation property.

The polyisocyanurate foam may have, for example, a thermal conductivity of about 0.023 W/mk or less. The thermal conductivity represents a size of thermal conduction, and as a value thereof is smaller, insulation performance is more excellent. As described above, the polyisocyanurate foam includes the polyol-based compound having high viscosity and the solid flame retardant even without including a nucleating agent, thereby forming a dense and uniform foam cell, such that excellent insulation property and flame retardancy may be implemented and economic feasibility may be achieved.

The polyisocyanurate foam may have a density of about 10kg/m³ to about 150kg/m³, specifically, may provide a relatively light foam having a density such as about 20kg/m³ to about 100kg/m³.

The polyisocyanurate foam may further include at least one of a catalyst, a surfactant and a foaming agent. The catalyst, for example, may be a trimerization catalyst, and may promote a trimerization reaction among three isocyanate groups and may improve a reaction rate, thereby making it easy to form the isocyanurate groups.

The catalyst may be at least one selected from the group consisting of acetic acid, octanoic acid, 2,4,6-tris [(dimethylamino)methyl]phenol), 1,3,5-tris 3-dimethylamine-propyl hexahydrotrizine, potassium hexanoate, and combinations thereof.

Since the foaming agent is present in the cell after the polyisocyanurate foam is formed, a material having low thermal conductivity and high stability may be used. The foaming agent may be at least one selected from the group consisting of cyclopentane, chlorofluorocarbon, isopentane, n-pentane, hydrochlorofluorocarbon, hydrofluorocarbon, water and combinations thereof. For example, cyclopentane which is a foaming agent without chlorine, water or mixtures thereof may be used to achieve an eco-friendly aspect.

The surfactant serves to properly control surface tension at the time of forming the foam cell, thereby inhibiting the size of the foam cell from being excessively increased, and stabilizing the formation of the foam cell. The surfactant may be variously used as known in the art without specific limitation.

In another exemplary embodiment of the present invention, the present invention provides a preparation method for a polyisocyanurate foam, including: (a) mixing and stirring a polyol-based compound having a viscosity of about 1,000 cps to about 100,000 cps at about 25°C and a solid flame retardant; and (b) polymerizing and foaming polyisocyanurate by mixing and stirring the mixture obtained from step (a) with an isocyanate-based compound.

For example, step (b) may include: mixing and stirring the mixture obtained from step (a) with an isocyanate-based compound to polymerize and foam polyisocyanurate.

Specifically, step (b) may include: mixing and stirring the mixture obtained from step (a) with at least one of a surfactant, a catalyst and a foaming agent, and then mixing and stirring the mixture obtained from step (a) with an isocyanate-based compound to polymerize and foam polyisocyanurate.

In other words, in step (b) may include: polymerizing and foaming polyisocyanurate by mixing and stirring the mixture which is obtained from step (a) with at least one of a surfactant, a catalyst and a foaming agent and an isocyanate-based compound sequentially.

For example, the stirring in step (a) may be performed at about 10°C to about 40°C. By performing the stirring within the above-described temperature range, the solid flame retardant may be smoothly dispersed to contribute to the formation of small and uniform foam cell.

In step (a), the stirring may be performed while increasing a stirring speed within the range of about 300 rpm to about 5,000 rpm. By performing the stirring while increasing a stirring speed within the above-described range, the solid flame retardant may be sufficiently dispersed to more effectively contribute to the formation of small and uniform foam cell.

For example, the stirring in step (b) may be performed at about 10°C to about 40°C for about 10 seconds to about 2 minutes. By performing the stirring within the above-described temperature and time range, the polymerization reaction between the polyol-based compound and the isocyanate-based compound and the trimerization reaction among three isocyanate groups may be effectively performed and the reaction rate may be properly controlled, such that the foam cell may be stably formed.

For example, the stirring in step (b) may be performed within a speed range of about 2,000 rpm to about 5,000 rpm. By performing the stirring within the above-described speed range, the polyol-based compound and the isocyanate compound may be properly mixed and contact time between both of compounds may be sufficiently secured, such that the polymerization reaction may be effectively generated.

Hereinafter, specific Examples of the present invention are described. It is to be noted that Examples to be described below are provided merely for specifically exemplifying or explaining the present invention, and accordingly, the present invention is not limited to the following Examples.

### Example

### Example 1

A polyol-based compound having a viscosity of 2000 cps at 25°C was prepared by mixing polyether polyol and polyester polyol at a weight ratio of 4 : 6. 20 parts by weight of aluminum hydroxide having an average particle diameter of 100µm as a solid flame retardant was mixed with 100 parts by weight of the polyol-based compound, and the obtained mixture was stirred by a general mechanical stirrer while gradually increasing a stirring speed from 300 rpm to 5,000 rpm. To the mixture obtained by the stirring above, 180 parts by weight of a surfactant, an amine catalyst, a hydrocarbon-based foaming agent, and polymeric methylene diphenylisocyanate were added, and the obtained mixture was stirred by a general mechanical stirrer at 25°C with a stirring speed of 5000rpm for 15 seconds, such that a polyisocyanurate foam in which an average diameter of a foam cell is 290 µm, was prepared.

### Example 2

A polyisocyanurate foam in which an average diameter of a foam cell is 254 µm, was prepared by the same condition and method as Example 1 except that 30 parts by weight of aluminum hydroxide was mixed as the solid flame retardant.

### Example 3

A polyisocyanurate foam in which an average diameter of a foam cell is 218 µm, was prepared by the same condition and method as Example 1 except that 15 parts by weight of aluminum hydroxide and 5 parts by weight of magnesium hydroxide were mixed as the solid flame retardant.

### Comparative Example 1

A polyisocyanurate foam in which an average diameter of a foam cell is 325 µm, was prepared by the same condition and method as Example 1 except that the solid flame retardant was not mixed.

### Comparative Example 2

A polyisocyanurate foam in which an average diameter of a foam cell is 318 µm, was prepared by the same condition and method as Example 1 except that the solid flame retardant was not mixed, but 5.0 parts by weight of isopropylphenyl diphenyl phosphate (IPPP) which is a liquid flame retardant was mixed.

### Comparative Example 3

A polyisocyanurate foam in which an average diameter of a foam cell is 370 µm, was prepared by the same condition and method as Example 1 except that the solid flame retardant was not mixed, but 15.0 parts by weight of isopropylphenyl diphenyl phosphate (IPPP) which is a liquid flame retardant was mixed.

### Experimental Example

An average particle diameter, thermal conductivity, and flame passing time of each of the foam cells of the polyisocyanurate foams of Examples 1 to 3 and the Comparative Examples 1 to 3 were measured, and the measured result values were shown in Table 1 below.

The average particle diameter of the foam cell was measured by an electron microscope (Hitachi, FE-SEM), the thermal conductivity thereof was measured by a thermal conductivity meter (EKO, HC-074), and the flame passing time thereof was measured by igniting a general torch, wherein a distance from a sample to flame formed by igniting the torch was determined as 10 cm, and measuring time from when the flame was formed until the sample passed through the flame.

**[Table 1]**

| | Average Diameter Of Foam Cell (µm) | Thermal Conductivity (W/mk) | Flame Passing Time (sec) |
|---|---|---|---|
| Example 1 | 290 | 0.0230 | 285 |
| Example 2 | 254 | 0.0215 | 310 |
| Example 3 | 218 | 0.0210 | 302 |
| Comparative Example 1 | 325 | 0.0240 | 240 |
| Comparative Example 2 | 318 | 0.0233 | 254 |
| Comparative Example 3 | 370 | 0.0251 | 270 |

It could be confirmed in all of Examples 1 to 3 that the average diameter of each of the foam cells was 290 µm or less, the thermal conductivity thereof was 0.0230 W/mK or less, and the flame passing time thereof was 280 seconds or more, and as a result, it could be expected that Examples 1 to 3 had excellent insulation property and flame retardancy.

In contrast, it could be confirmed in all of Comparative Examples 1 to 3 that the thermal conductivity of each of the foam cells was 0.0233 W/mK or more, and the flame passing time thereof was 270 seconds or less, and as a result, it could be expected that Comparative Examples 1 to 3 had poor insulation property and flame retardancy.

In particular, it could be expected in Comparative Example 2 that since the liquid flame retardant in a relatively small content was included, degree at which surface tension is increased was small at the time of forming the foam by the polymerization reaction, such that the thermal conductivity was slightly increased, which was slightly disadvantageous for insulation property; however, the flame passing time was significantly small, such that the flame retardancy was remarkably poor.

Further, it could be expected in Comparative Example 3 that since the liquid flame retardant in a relatively large content was included, which was slightly disadvantageous for flame passing time; however, since degree at which surface tension is increased was large at the time of forming the foam, the average diameter of the foam cell of Comparative Example 3 was larger than that of Comparative Example 2, such that the thermal conductivity was more increased, whereby the insulation property was remarkably poor.

## Claims

1. A polyisocyanurate foam formed by polymerizing and foaming a composition comprising: a polyol-based compound, an isocyanate-based compound, and a solid flame retardant, wherein the viscosity of the polyol-based compound is 1,000 cps to 100,000 cps at 25°C.

2. The polyisocyanurate foam of claim 1, wherein the solid flame retardant has an average particle diameter of 5 µm to 100 µm.

3. The polyisocyanurate foam of claim 1, wherein the solid flame retardant is at least one selected from the group consisting of a phosphorus-based flame retardant, a metal hydrate flame retardant, a halogen-based flame retardant, a flame-retardant aid and combinations thereof.

4. The polyisocyanurate foam of claim 1, wherein the solid flame retardant is at least one selected from the group consisting of aluminum hydroxide, magnesium hydroxide, and combinations thereof.

5. The polyisocyanurate foam of claim 1, wherein the composition includes 110 parts by weight to 220 parts by weight of the isocyanate-based compound and 5 parts by weight to 40 parts by weight of the solid flame retardant, relative to 100 parts by weight of the polyol-based compound.

6. The polyisocyanurate foam of claim 1, wherein the viscosity of the polyol-based compound is 2,000 cps to 30,000 cps at 25°C.

7. The polyisocyanurate foam of claim 1, wherein a foam cell formed in the polyisocyanurate foam has an average diameter of 50 µm to 290 µm.

8. The polyisocyanurate foam of claim 1, wherein the thermal conductivity of the polyisocyanurate foam is 0.023 W/mk or less.

9. The polyisocyanurate foam of claim 1, wherein the polyisocyanurate foam further includes at least one of a catalyst, a surfactant and a foaming agent.

10. The polyisocyanurate foam of claim 1, wherein the composition does not include a nucleating agent.

11. A preparation method for a polyisocyanurate foam, comprising:
(a) mixing and stirring a polyol-based compound having a viscosity of 1,000 cps to 100,000 cps at 25°C and a solid flame retardant; and
(b) polymerizing and foaming polyisocyanurate by mixing and stirring the mixture obtained from step (a) with an isocyanate-based compound.

12. The preparation method of claim 11, wherein step (b) comprises: mixing and stirring the mixture obtained from step (a) with at least one of a surfactant, a catalyst and a foaming agent, and then mixing and stirring the mixture obtained from step (a) with an isocyanate-based compound to polymerize and foam polyisocyanurate.
